# EUROPÄISCHE PATENTSCHRIFT

(11) **EP 0 951 695 B1**
(45) Veröffentlichungstag und Bekanntmachung des Hinweises auf die Patenterteilung: **05.12.2001**
(21) Anmeldenummer: 97954336.0
(22) Anmeldetag: 29.12.1997
(51) Int. Cl.: G06T 5/20

(54) **VERFAHREN UND VORRICHTUNG ZUR ANALOGEN SIGNALVERARBEITUNG**
METHOD AND DEVICE FOR PROCESSING ANALOG SIGNALS
PROCEDE ET DISPOSTIF DE TRAITEMENT ANALOGIQUE DE SIGNAUX

(30) Priorität: 08.01.1997 DE 19700382
(43) Veröffentlichungstag der Anmeldung: 27.10.1999
(73) Patentinhaber: INSTITUT FÜR MIKROELEKTRONIK STUTTGART, 70569 Stuttgart (DE)
(72) Erfinder: APEL, Uwe, D-72666 Neckartailfingen (DE); HÖFFLINGER, Bernd, D-71063 Sindelfingen (DE); SEGER, Ulrich, D-71106 Magstadt (DE)
(74) Vertreter: Münich, Wilhelm, Dr.
(86) Internationale Anmeldenummer: DE9703025
(87) Internationale Veröffentlichungsnummer: WO9830975

(56) Entgegenhaltungen:
- EP-A- 0 676 764
- US-A- 5 153 731
- US-A- 5 440 079
- TREMBLAY M ET AL: "MAR: AN INTEGRATED SYSTEM FOR FOCAL PLANE EDGE TRACKING WITH PARALLEL ANALOG PROCESSING AND BUILT-IN PRIMITIVES FOR IMAGE ACQUISITION AND ANALYSIS" IEEE 10TH INTERNATIONAL CONFERENCE ON PATTERN RECOGNITION, Bd. 2, 16. - 21.Juni 1990, ATLANTIC CITY,NJ,USA, Seiten 292-298, XP000166504

## Beschreibung

### Technisches Gebiet

Die Erfindung bezieht sich auf ein Verfahren zur analogen Signalverarbeitung von Bildsignalen aus zeitdiskret abtastbaren, array-förmig angeordneten Bildpunkten unter Verwendung eines resistiven Netzwerkes. Ferner wird eine diesbezügliche Vorrichtung beschrieben.

### Stand der Technik

In der analogen Bildverarbeitung werden resistive Netze, oft auch als elektronische Retina bezeichnet, zur Filterung der Bilddaten eingesetzt. Die Aufgabe solcher Bausteine ist unter anderem eine verstärkte Repräsentation von Kanten in den Bilddaten durch Überhöhen des Kontrastsprungs; kontinuierliche Signal-Änderungen mit niederer Ortsfrequenz (wie Sie z.B. von driftenden Signalen hervorgerufen werden) sollen unterdrückt und durch ein Signal mittlerer Intensität wiedergegeben werden.

Im Vergleich zu Filteroperationen, die auf digitalen Rechnern durchgeführt werden, bietet die analoge Bildbearbeitung den Vorteil, daß die Bilddaten parallel verarbeitet werden und damit eine größere Verarbeitungsgeschwindigkeit bei vertretbarem Hardwareaufwand erreicht werden kann.

Bei der Bildpunkteverarbeitung von flächig ausgebildeten Bildsensoren, die aus arrayförmig angeordneten Einzelbildpunkten zusammengesetzt sind ist jeder Bildpunkt auf einen Knoten des resistiven Gitters, d. h. der elektronischen Retina, an dem eine Schaltungsanordnung zur Signalübertragung und Weiterleitung vorgesehen ist, abzubilden. Es erfolgt eine räumliche Filterung der Bildinformation jedes einzelnen Bilpunktes durch Differenzbildung zwischen der sich einstellenden Potentialverteilung auf dem Widerstandsnetz und dem tatsächlichen Grauwertbild.

Eine derartige integrierte Lösung von Bildsensor und elektronsicher Retina, ist in M.A. Sivilotti, M. A. Mahowald, and C.A. Mead: "Reaf-Time Visual Computations Using Analog CMOS Processing Arrays", *Stanford Conference VLSI*, *Cambridge, MIT Pres*. pp.295-312, 1987 sowie in H. Kobayashi, and J.L. White, and A.A. Abidi: "An Analog CMOS Network for Gaussian Convolution with Embedded Image Sensing", IEEE International Solid-State Circuits Conference, pp.216-217, 1990 beschrieben. Allerdings weisen die bekannten Lösungen eine deutlich reduzierte räumliche Auflösung und einen geringen Füllfaktor infolge der erhöhten Anzahl von Bauelementen, die je Bildpunkt erforderlich sind, auf. Verbunden mit der geringen realisierbaren Bildfeldgröße wirken sich optische Effekte, wie z.B. das Aliasing störend aus.

Die erreichbare Bildfeldgröße ist aber auch begrenzt im Fall eines separaten Retina-Bausteins (ohne eigenen Sensor) für die Vorverarbeitung von Bilddaten, die mit einer eigenständigen Kamera aufgenommen werden. Selbst bei Fertigung eines solchen Bausteins in einem hochintegriertem Prozeß können mit verfügbaren Chipgrößen nur Teilbilder bearbeitet werden, die nur einen unzureichenden Ausschnitt des Gesamtbildes darstellen.

Systemaufbauten mit parallelem Einsatz mehrer Retinabausteine sind prinzipiell realisierbar, der Systemkosten-, Verarbeitungszeit- und Verlustleistungs-Vorteil, den die analoge Verarbeitung jedoch gegenüber den digitalen Bildverarbeitungssystemen verspricht, wird dadurch jedoch minimiert.

### Darstellung der Erfindung

Der Erfindung liegt die Aufgabe zugrunde ein Verfahren zur analogen Signalverarbeitung von Bildsignalen aus zeitdiskret abtastbaren, array-förmig angeordneten Bildpunkten unter Verwendung eines resistiven Netzwerkes derart anzugeben, daß die Verarbeitung von Signalen aus zweidimensionalen Sensorarrays, die flächenmäßig deutlich größer sind als das Verarbeitungsnetzwerk selbst, möglich ist. Insbesondere sollen die Leistungs- und Flächenanforderungen, wie sie z.B. bei Bildaufnehmerbausteinen bestehen, verbessert werden.

Die Lösung der der Erfindung zugrundeliegenden Aufgabe ist Gegenstand des Anspruchs 1. Eine erfindungsgemäße Vorrichtung zur Durchführung des erfindungsgemäßen Verfahrens nach Anspruch 1 ist Gegenstand des Anspruchs 7. Den Erfindungsgedanken vorteilhaft weiterbildende Merkmale sind Gegenstand der Unteransprüche.

Die Erfindung geht von der Idee aus, das Array der elektronischen Retina "rollierend" zu betreiben. Der flächig ausgebildete Bildsensor wird quasi von einer vorzugsweise zu einem zylinderartigen Gebilde geformten, elektronischen Retina "überrollt", wobei eine Bildsignalübertragung von den im Bildsensorarray angeordneten Bildpunkten zu den einzelnen Maschenknoten der elektronischen Retina erfolgt. Der bildliche Vergleich mit einer zu einem Zylinder zusammengerollten Retina dient dem besseren Verständnis zur Signalübertragung, die mittels geeigneter Adressierung der Bildpunkte und Maschenpunkte an der Retina zur Signalübertragung erfolgt.

Erfindungsgemäß zeichnet sich das Verfahren zur analogen Signalverarbeitung von Bildsignalen aus zeitdiskret abtastbaren, array-förmig angeordneten Bildpunkten unter Verwendung eines resistiven Netzwerkes, der sogenannten elektronischen Retina, mit einer zweidimensionalen Feldstruktur, deren Zeilenanzahl m kleiner als die Zeilenanzahl p des Bildpunkte-Arrays ist, wobei eine Übertragung der Bildsignale aus den Bildpunkten in die elektronische Retina derart zeilenweise erfolgt, dadurch aus, daß beginnend mit der ersten Zeile von Bildpunkten eine Übertragung der Bildsignale in die erste Zeile der elektronischen Retina erfolgt, bis nach Übertragung der Bildsignale aus der m-ten Zeile des Bildpunkte-Arrays in die m-te Zeile der elektronischen Retina, die Bildpunkte der m+1.- Zeile des Bildpunkte-Arrays in die elektronische Retina, beginnend wieder mit der ersten Zeile übertragen werden, bis die in rollierender Weise p-te Zeile des Bildpunkte-Arrays in die elektronische Retina übertragen wird und daß jeweils zwischen zwei rollierend aufeinanderfolgenden Übertragungsvorgängen von Bildsignalen auf die elektronische Retina, die Zeilen der Retina über eine eigenständige Signalleitung ohne Beeinflussung des Übertragungsvorgangs ausgelesen werden.

Die erfindungsgemäße Verwendung der elektronischen Retina bietet eine Problemlösung durch eine Mehrfachnutzung des resistiven Netzes, die als zeitliches Multiplexing oder auch als rollierender Betrieb bezeichnet werden kann.

Da die elektronische Retina keinen Sensoranteil aufweist, gibt es keine feste Zuordnung zwischen den Schaltungselementen des resistiven Netzes und den geometrischen Bildpunkten des array-förmig ausgebildeten Bildsensors, so daß eine wahlfreie Zuordnung einzelner Netzbereiche der elektronischen Retina für die Bildverarbeitung möglich ist.

Das in Retinabausteinen aufgebaute resistive Netz weist typischerweise eine Netzcharakteristik mit einer begrenzten Femwirkung auf, die sich äquivalent zu der in digitalen Filteroperationen verwendeten Gauß-Funktion verhält. Die in der Bildverarbeitung üblicherweise verwendeten Kohärenzlängen sind deutlich kleiner als 5. Das heißt, daß nur eine begrenzte Zahl von benachbarten Bildpunkten einen Einfluß auf den Ausgabewert eines Bildpunktes haben. Potentialeinflüsse über eine Distanz, die drei Kohärenzlängen (κ) übersteigt, gehen im Rauschen unter.

Bei einer zeilenweise Übertragung der Sensorsignale bedeutet dies, daß nach Auslesen der Retinabildaten aus der Zeile n in die Zeile n - k mit k = ck neue Bilddaten eingeschrieben werden können. Ein Einfluß der neuen Bildinformationen auf den Retinaausgang ist nicht zu erwarten, wenn die Konstante c größer 3 gewählt wird.

Der maßgebliche Vorteil der Erfindung liegt darin, daß eine Retina mit einer begrenzten Anzahl von Zeilen verwendet werden kann, um Bildinformationen eines Kamerachips mit einer großen Zeilenzahl in Echtzeit zu verarbeiten.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Prinzipieller Aufbau einer eigenständigen "elektronischen Retina" für die Verarbeitung von zeitlich diskret abgetasteten Sensorsignalen,
- Fig. 2: schematisierte Anordnung zwischen der Bildpunkteanordnung des Bildsensors und der elektronischen Retina und
- Fig. 3 a-e: Bildsequenzen, die mit der erfindungsgemäßen rollierenden Retina aufgenommen worden sind.

### Wege zur Ausführung der Erfindung, gewerbliche Verwendbarkeit

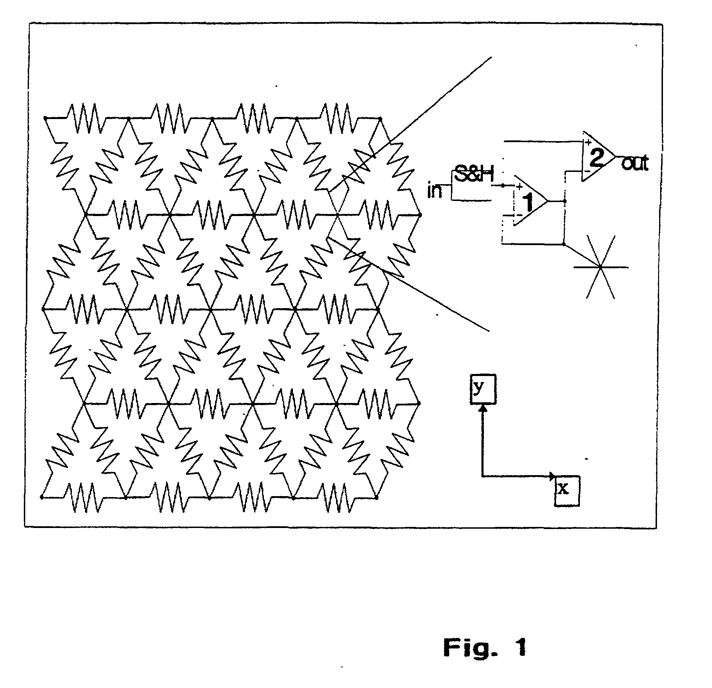

Eine an sich bekannte Anordnung eines resitiven Netzwerks ist in Figur 1 dargestellt. Die als Netzwerk ausgebildete elektronische Retina besteht aus einer 2-dimensionalen Maschenanordnung, die eine Vielzahl einzelner Schaltungen aufweist, von denen eine in vergrößerte Darstellung gezeigt ist. Die jeweils auf den Knotenpunkten der Maschenanordnung befindlichen Schaltungen weisen eine Sample and Hold (S&H) Einheit mit zwei verschalteten Verstärkern 1 und 2 auf. Die Schaltung dient der Bildsignalübertragung von jedem einzelnen Bildpunkt auf das Netzwerk. Ferner dient die S&H-Einheit für eine zeitverzögerte Auslesung aller in das Netzwerk übertragenen Bildsignale.

Da die Feldgröße der elektronischen Retina kleiner bemessen ist als die Arraygröße des Bildsensors und keine feste Zuordnung zwischen den Bildpunkten und den Maschen des Netzwerkes besteht, ist zur vollständigen Übertragung der Bildsignale des Bildsensors auf die Retina diese relativ zur Oberfläche des Bildsensors zu bewegen, so daß jeder Bildpunkt des Bildsensors mit einem Maschenknoten der Retina zur Signalübertragung in Kontakt kommt.

In bevorzugter Weise wird hierzu die Retina bildlich gesehen regelrecht über den flächigen Bildsensor abgerollt. Hierzu ist die Retina zu einem Zylinder geformt zu denken, der über seine Mantelfläche in Kontakt mit dem Bildsensor tritt. Durch die linienhafte Berührfläche zwischen Bildsensor und Retina erfolgt ein zeilenhafter Signalübertrag zwischen Bildsensor und Retina. Die Signalübertragung wird mittels geeigneter Adressierung, die dem vorstehenden Fall entspricht realisiert.

Die in Figur 1 dargestellte y-Ausdehnung der Retina sei 2*k und wird wie vorstehend beschrieben rollierend genutzt. Mit einem solchen Ansatz wird es möglich, eine Retina für die Vollbildbearbeitung auf einem Chip zu integrieren. Die Auslegung der Zeilenzahl von 2*k ist dabei so zu wählen, daß das resistve Netz ausreichend Zeit zum Einschwingen vor Ausgabe des Ergebnisses hat (s.o. c > 3).

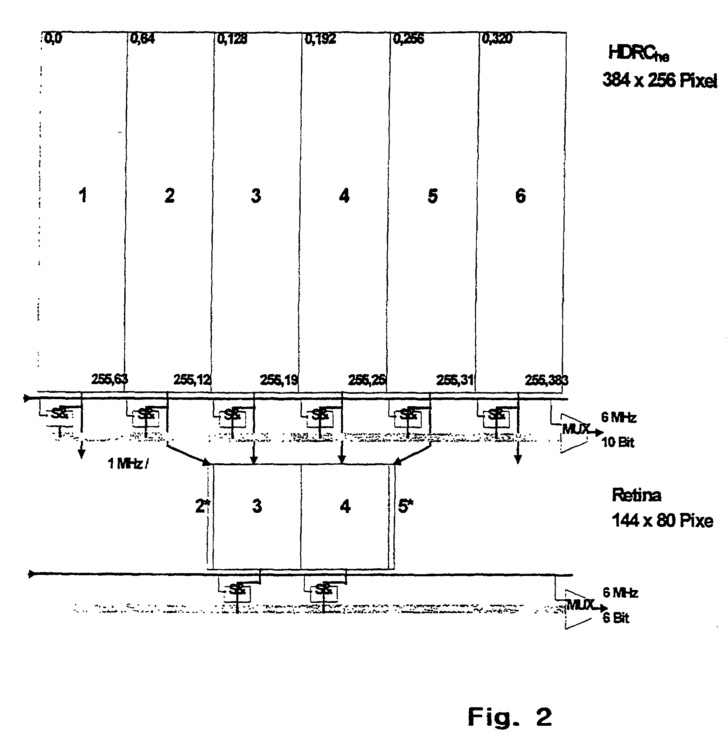

In Figur 2 ist ein Bildsignalübertragungsschema eines HDRC-Kamera-Chips mit einer Bildfeldgröße von 384*256 hexagonal angeordneten Pixeln dargesetilt. Die Zeilenlänge ist dabei in 6 Segmente zu je 64 Pixeln unterteilt, um durch paralleles Auslesen der Teilzeilen mit einem Pixeltakt von 1 MHz einen größeren Datendurchsatz zu erreichen. Der Pixel- und der Zeilentakt des Bildchips und der Retina laufen dabei synchron. Die Retina ist mit einer Bildfeldgröße von 144*80 für die Verarbeitung der Bilddaten von 2 Segmenten des Kamerachips ausgelegt. An jeder Außenseite der Retina sind acht Zeilen bzw. Spalten zur Unterdrückung von Randeinflüssen des Widerstandsnetzes hinzugefügt, an die weitergehende Bildverarbeitung werden nur die Daten aus dem Kernbereich von 128*64 ausgegeben. Das Einladen der Randspalten erfolgt durch Anbindung an die entsprechende Segmente des Kamera-Bausteins. Für die korrekte Definition der Bilddaten im oberen und unteren Bildrand ist ein geeignetes Ablaufschema in den Retina-internen Zeilenkontroller zu übernehmen. Die Steuerung der Retina ist so ausgelegt, daß sie optional im roll-over-Betriebsmodus betrieben werden kann.

Im konkreten Aufbau der vorliegenden Retina sind für die Spaltenadressierung zwei Schieberegisterketten angelegt, in der ersten wird die Zeile für den Data-input, in der zweiten die Zeile für Data-Output adressiert. Die 2. Schieberegisterkette wird im rollover-Modus mit einer Verzögerung von 32 Zeilentakten zur Einlesezeile gestartet. Da in diesem Modus nur die Bildinformationen des Kernbereichs in einer Höhe von 64 Zeilen ausgegeben werden, erscheint die erste Zeile des eingeschwungenen Retinabildes zu dem Zeitpunkt, wenn die 41. Zeile aus dem Kamerachip in die Retina transferiert wird. Ist die 32. Zeile des Retinabildes ausgelesen, kann der 2. vertikale Bildabschnitt des Kamerachips in die Retina geschrieben werden. Auf diese Weise wird eine Bearbeitung der vollen Bildhöhe der HDRC-Kamera von 256 Zeilen möglich.

Das Verarbeitungsschema der Retina bedingt, daß jeweils für 64 effektiv bearbeitete Bildzeilen 80 Zeilen aus der Kamera einzulesen sind. Dem wird dadurch Rechnung getragen, daß für die folgenden Bilder die Retinazeilen 0 bis 15 und 64 bis 79 zeitgleich und identisch beschrieben werden.

Dazu wurde im ersten, 80 bit langen Schieberegister eine Rückkopplung hinter dem Flipflop 63 eingeführt. Im Überlaufbereich sind immer zwei Zeilen zum Beschreiben adressiert, es ergeben sich somit keine Randeffekte an den Schnittstellen zwischen zwei aneinander anschließenden Retinateilbildern.

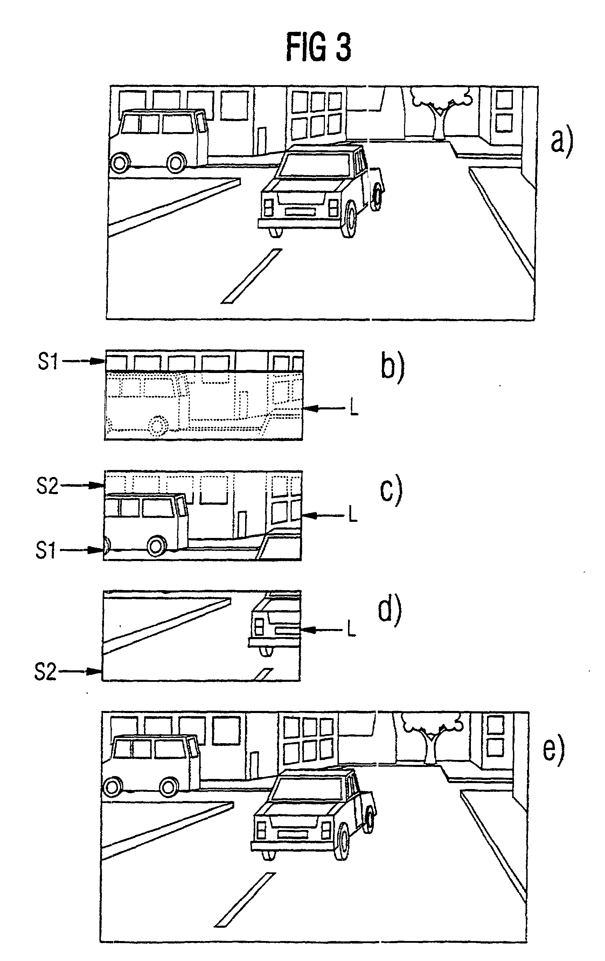

Die Figuren 3 a - e zeigen anhand eines Bildbeispiels die sequenzielle Aufnahmetechnik mit der rollierenden Retina.

Figur 3 a zeigt eine simulierte Aufnahme eines hexagonalen logarithmischen Sensors mit geringer Auflösung. Der hohe Szenenkontrast wird komplett aufgenommen, wesentliche Informationen über Reflektionsunterschiede bleiben erhalten und können durch Nachbearbeitung verstärkt werden.

Figur 3 b zeigt eine erste Phase des auif die Retina übertragenen Bildes. Der Schreibvektor S1 steht aktuell im oberen Drittel des Arrays, wobei in unmittelbarer Umgebung der aktuellen Schreibposition die Netzknoten noch nicht eingeschwungen sind. Es wird noch nicht ausgelesen.

Der Auslesevektor in Figur 3 c läuft mit n Zeilen hinter dem Schreibevektor S1 her. Der erste Schreibvektor S1 hat das untere Ende des Verarbeitungsarrays bereits erreicht, seit mehreren Zeilen wird durch einen zweiten Schreibvektor S2 der Overlappbereich parallel beschrieben, die Originaldaten rollen über das Verarbeitungsnetz ab. Der Lesevektor L steht am Ende des Lesebereichs und kurz vor dem rollieren. Nächste gültige Leseposition ist n Zeilen hinter Schreibvektor S2.

Gemäß Figur 3 d steht der 2te Schreibvektor S2 kurz vor dem unteren Überlappungsbereich (in welchem noch der Bildinhalt der letzten Bildabwicklung zu erkennen ist). Der nächste Schreibvektor wird mit dem Erreichen der nächsten Datenzeile aktiviert.

Die Verarbeitung des Originalbildes ist in Echtzeit gemäß Figur 3 e über die gesamte Höhe des Originalbildes auf einer Breite des Verarbeitungsnetzwerkes durchgeführt worden. Die verarbeiteten Daten stehen mit einem Delay von n Zeilen zur Verfügung wobei n dem dreifachen der Kohärenzlänge entspricht. Der Grauwertevorrat ist gesenkt worden gleichzeitig sind relevante Bildbereiche hervorgehoben. (Vergl. Erkennbarkeit der Anhängerkupplung zwischen Original und verarbeitetem Bild.)

### BEZUGSZEICHENLISTE

- 1: Verstärker
- 2: Verstärker
- S&H: Sample and Hold
- S1: erster Schreibvektor
- S2: zweiter Schreibvektor
- L: Lesevektor

## Patentansprüche

1. Verfahren zur analogen Signalverarbeitung von Bildsignalen aus zeitdiskret abtastbaren, array-förmig angeordneten Bildpunkten unter Verwendung eines resistiven Netzwerkes, der sogenannten elektronischen Retina, mit einer zweidimensionalen Feldstruktur, deren Zeilenanzahl m kleiner als die Zeilenanzahl p des Bildpunkte-Arrays ist, wobei eine Übertragung der Bildsignale aus den Bildpunkten in die elektronische Retina derart zeilenweise erfolgt,
daß beginnend mit der ersten Zeile von Bildpunkten eine Übertragung der Bildsignale in die erste Zeile der elektronischen Retina erfolgt, bis nach Übertragung der Bildsignale aus der m-ten Zeile des Bildpunkte-Arrays in die m-te Zeile der elektronischen Retina, die Bildpunkte der m+1.- Zeile des Bildpunkte-Arrays in die elektronische Retina, beginnend wieder mit der ersten Zeile übertragen werden, bis die in rollierender Weise p-te Zeile des Bildpunkte-Arrays in die elektronische Retina übertragen wird und
daß jeweils zwischen zwei rollierend aufeinanderfolgenden Übertragungsvorgängen von Bildsignalen auf die elektronische Retina, die Zeilen der Retina über eine eigenständige Signalleitung ohne Beeinflussung des Übertragungsvorgangs ausgelesen werden.

2. Verfahren nach Anspruch 1,
**dadurch gekennzeichnet, daß** der Übertragungsvorgang von Bildsignalen auf die elektronische Retina mittels wenigstens einem Schreibvektor und der Auslesevorgang mittels eines Lesevektors vorgenommen wird.

3. Verfahren nach Anspruch 2,
**dadurch gekennzeichnet, daß** der Abstand n-k zwischen einer Zeile n der elektronischen Retina, aus der Bildsignale gelesen werden und einer Zeile k, in die neue Bildsignale übertragen werden, minimal auf das 3 bis 5-fache der Kohärenzlänge der Retina gesetzt wird.

4. Verfahren nach einem der Ansprüche 1 bis 3,
**dadurch gekennzeichnet, daß** die Zeilen der array-förmig angeordneten Bildpunkte in Spalten-Segmente unterteilt werden, daß die Bildsignale in jedem Spalten-Segment nacheinander zeilenweise vollständig auf die elektronische Retina übertragen werden.

5. Verfahren nach einem der Ansprüche 1 bis 4,
**dadurch gekennzeichnet, daß** für den Übertragungsvorgang und für den Auslesevorgang Adressierungen vorgenommen werden, die unabhängig voneinander erfolgen.

6. Verfahren nach einem der Ansprüche 1 bis 5,
**dadurch gekennzeichnet, daß** der Übertragungsvorgang in der elektronischen Retina durch Einstellen eines lokalen Gleichgewichtes erfolgt, dessen Zeitdauer bis zum Erreichen des Gleichgewichtszustandes kürzer ist, als der zeitliche Abstand zwischen einem Übertragungsvorgang und einem Auslesevorgang in einer Zeile.

7. Vorrichtung zur analogen Signalverarbeiturg von Bildsignalen aus zeitdiskret abtastbaren, array-förmig angeordneten Bildpunkten unter Verwendung eines resistiven Netzwerkes, der sogenannten elektronischen Retina, mit einer zweidimensionalen Feldstruktur, deren Zeilenanzahl m kleiner als die Zeilenanzahl p des Bildpunkte-Arrays ist, wobei eine Übertragung der Bildsignale aus den Bildpunkten in die elektronische Retina zeilenweise erfolgt, zur Durchführung des Verfahrens nach einem der Ansprüche 1 bis 6, wobei zur Übertragung der Bildsignaldaten in die elektronische Retina und für den Auslesevorgang getrennt voneinander Signalleitungen und Signalverarbeitungskomponenten vorgesehen sind,
**gekennzeichnet durch** eine Übertragungseinrichtung, die beginnend mit der ersten Zeile von Bildpunkten eine Übertragung der Bildsignale in die erste Zeile
der elektronischen Retina ausführt, bis nach Übertragung der Bildsignale aus der m-ten Zeile des Bildpunkte-Arrays in die m-te Zeile der elektronischen Retina, die Bildpunkte der m+1.- Zeile des Bildpunkte-Arrays in die elektronische Retina, beginnend wieder mit der ersten Zeile übertragen werden, bis die in rollierender Weise p-te Zeile des Bildpunkte-Arrays in die elektronische Retina übertragen wird , und
**durch** eine Ausleseeinrichtung, **durch** die jeweils zwischen zwei rollierend aufeinanderfolgenden Übertragungsvorgängen von Bildsignalen auf die elektronische Retina, die Zeilen der Retina über eine eigenständige Signalleitung ohne Beeinflussung des Übertragungsvorgangs ausgelesen werden.

8. Vorrichtung nach Anspruch 7,
**dadurch gekennzeichnet, daß** die elektrocische Retina eine Maschenstruktur aufweist, die zur wahlfreien Einstellung der auf die analogue Bildverarbeitung wirksame Kohärenzlänge über eine einheitlich steuerbare Leitfähigkeit verfügt.

## Claims

1. Analog signal processing method for processing video signals from pixels arranged in the form of an array for scanning in a sequence discrete in time, using a resistive network, the so-called electronic retina, having a two-dimensional field structure with a number of lines m smaller than the number of lines *p* in the pixel array, wherein the transfer of said video signals from said pixels into said electronic retina is performed by lines in such a way
that, beginning from the first line of pixels, said video signals are transferred into the first line of said electronic retina until, after transmission of said video signals from the *m*^{th} line of said pixel array into the *m*^{th} line of said electronic retina, the pixels of line *m*⁺¹ of said pixel array are transferred into said electronic retina, starting again with the first line, until the *p*^{th} line of said pixel array is transferred into said electronic retina in a revolving manner, and
that between two respective operations of video signal transfer to said electronic retina in revolving succession, the lines of said retina are read out via an independent signal line without taking any influence on the transmission operation.

2. Method according to Claim 1,
**characterised in that** said operation of transmitting video signals to said electronic retina is performed by means of at least one write vector and said reading operation is performed by means of a read vector.

3. Method according to Claim 1,
**characterised in that** the distance *n-k* between a line *n* in said electronic retina, from which video signals are read, and a line *k* into which new video signals are transmitted is set to the a minimum length corresponding to 3 to 5 times the length of coherence of said retina.

4. Method according to any of the Claims 1 to 3,
**characterised in that** the lines of said pixels arranged in the form of an array are subdivided into column segments, and that said video signals in each column segment are completely transferred to said electronic retina by lines in succession.

5. Method according to any of the Claims 1 to 4,
**characterised in that** addressing operations are performed for said transmission operation and for said reading operation, which addressing operations are performed independently of each other.

6. Method according to any of the Claims 1 to 5,
**characterised in that** the operation of transmission is performed in said electronic retina by adjustment of a local balance having a duration up to the achievement of a state of equilibrium, which is shorter than the time interval between a transmission operation and a reading operation in a line.

7. Device for performing analog signal processing on video signals from pixels arranged in the form of an array for scanning in a sequence discrete in time, using a resistive network, the so-called electronic retina, having a two-dimensional field structure with a number of lines m smaller than the number of lines p in the pixel array, wherein the transfer of said video signals from said pixels into said electronic retina is performed by lines, for realising the method according to any of the Claims 1 to 6, wherein signal lines and signal processing components are provided separately for the transmission of the video signal data into said electronic retina and for the read-out operation,
**characterised by** a transfer means that, starting from the first line of pixels, performs a transfer of the video signals into the first line of said electronic retina until, after transmission of the video signals from the *m*^{th} line of said pixel array into the *m*^{th} line of said electronic retina, the pixels in the *m*⁺¹ line of said pixel array are transferred into said electronic retina, starting again with the first line, until the *p*^{th} line of said pixel array is transferred into said electronic retina in a revolving manner, and
by a read-out means that is used to read the lines of said retina via an independent signal line, without taking any influence on the transmission operation, between two respective operations of video signal transfer to said electronic retina in revolving succession.

8. Device according to Claim 7,
**characterised in that** said electronic retina presents a mesh structure which is endowed with a uniformly controllable conductivity for optional adjustment of the coherence length effective on the analog video processing operation.

## Revendications

1. Procédé de traitement analogique de signaux à traiter des signaux vidéo depuis des éléments d'image disposés sous forme d'une matrice à balayer en une suite discrète en temps, en utilisant un réseau à résistance, qui est connu comme rétine, qui a une structure à zones bidimensionnelle à un nombre de lignes *m* qui est plus petit que le nombre de lignes *p* dans la matrice des éléments d'image, dans lequel le transfert desdits signaux vidéo depuis lesdits éléments d'image dans ladite rétine électronique se fait par lignes d'une façon
qu'en débutant par la première ligne d'éléments d'image, lesdits signaux vidéo sont transférés dans la première ligne de ladite rétine électronique jusqu'à ce que tous les éléments d'image de la ligne *m*⁺¹ soient transférés dans ladite rétine électronique, après le transfert desdits signaux vidéo de la ligne *m* de ladite matrice des éléments d'image dans la ligne *m* de ladite rétine, en commençant de nouveau par la première ligne jusqu'à ce que la ligne *p* de ladite matrice des éléments d'image soit transférée dans ladite rétine électronique d'une manière circulante, et
que les lignes de ladite rétine sont lues via un circuit de signaux indépendant entre deux opérations respectives de transfert des signaux vidéo dans ladite rétine électronique en succession circulante, sans aucune influence étant prise sur l'opération de transfert.

2. Procédé selon la revendication 1,
**caractérisé en ce que** ladite opération de transfert des signaux vidéos à ladite rétine électronique se fait moyennant au moins un vecteur d'écriture et ladite opération de lecture se fait moyennant un vecteur de lecture.

3. Procédé selon la revendication 1,
**caractérisé en ce que** l'écart *n-k* entre une ligne *n* dans ladite rétine électronique, de laquelle se fait la lecture des signaux vidéo, et une ligne *k*, dans laquelle se fait le transfert des nouveaux signaux vidéo, est ajusté à une longueur qui correspond à 3 à 5 fois la longueur de cohérence de ladite rétine au minimum.

4. Procédé selon une quelconque des revendications 1 à 3,
**caractérisé en ce que** les lignes desdits éléments d'image disposés sous forme d'une matrice sont divisés en segments de colonne, et **en ce que** lesdits signaux vidéo dans chaque élément de colonne sont complètement transférés à ladite rétine électronique par lignes en succession.

5. Procédé selon une quelconque des revendications 1 à 4,
**caractérisé en ce que** des opérations d'adressage sont réalisées pour ladite opération de transfert et pour ladite opération de lecture, qui sont réalisées indépendamment l'une de l'autre.

6. Procédé selon une quelconque des revendications 1 à 5,
**caractérisé en ce que** l'opération de transfert se fait dans ladite rétine électronique par établissement d'une balance locale à une durée jusqu'au moment auquel un état d'équilibre est achevé, cette durée étant plus courte que l'intervalle entre une opération de transfert et une opération de lecture dans une ligne.

7. Dispositif à réaliser un traitement analogique de signaux depuis des éléments d'image disposés sous forme d'une matrice à balayer en une suite discrète en temps, en utilisant un réseau à résistance, qui est connu comme rétine, qui a une structure à zones bidimensionnelle à un nombre de lignes *m* qui est plus petit que le nombre de lignes *p* dans la matrice des éléments d'image, dans lequel le transfert desdits signaux vidéo depuis lesdits éléments d'image dans ladite rétine électronique se fait par lignes, pour la réalisation du procédé selon une quelconque des revendications 1 à 6, dans lequel des lignes de signaux et des composants de traitement de signaux sont disposés de façon séparée pour le transfert des donnés de signal vidéo dans ladite rétine électronique et pour l'opération de lecture,
**caractérisé par** un moyen de transfert, qui, en débutant par la première ligne d'éléments d'image, réalise un transfert desdits signaux vidéo dans la première ligne de ladite rétine électronique jusqu'à ce que tous les éléments d'image de la ligne *m*⁺¹ de ladite matrice d'éléments d'image soient transférés dans ladite rétine électronique, après le transfert desdits signaux vidéo de la ligne *m* de ladite matrice des éléments d'image dans la ligne *m* de ladite rétine, en commençant de nouveau par la première ligne jusqu'à ce que la ligne *p* de ladite matrice des éléments d'image soit transférée dans ladite rétine électronique d'une manière circulante, et
par un moyen de lecture moyennant duquel les lignes de ladite rétine sont lues via un circuit de signaux indépendant entre deux opérations respectives de transfert des signaux vidéo dans ladite rétine électronique en succession circulante, sans aucune influence étant prise sur l'opération de transfert.

8. Dispositif selon la revendication 7,
**caractérisé en ce que** ladite rétine électronique présente une structure à mailles à une conductibilité uniformément contrôlable pour l'ajustage optionnel de la longueur de cohérence qui agit sur l'opération de traitement analogue de signaux vidéo.
